# EUROPÄISCHE PATENTSCHRIFT

(11) **EP 1 022 500 B1**
(45) Veröffentlichungstag und Bekanntmachung des Hinweises auf die Patenterteilung: **03.03.2004**
(21) Anmeldenummer: 99125717.1
(22) Anmeldetag: 23.12.1999
(51) Int. Cl.: F16K 27/04

(54) **Sanitärarmatur, insbesondere Waschtischarmatur**
Sanitary valve, especially for wash basins
Robinet sanitaire, en particulier pour les lavabos

(30) Priorität: 22.01.1999 DE 19902397
(43) Veröffentlichungstag der Anmeldung: 26.07.2000
(73) Patentinhaber: HANSA METALLWERKE AG, 70567 Stuttgart (DE)
(72) Erfinder: Pülmanns, Gerhard, 47918 Tönisvorst (DE); Andreier, Thomas, 40221 Düsseldorf (DE)
(74) Vertreter: Ostertag, Ulrich, Dr.

(56) Entgegenhaltungen:
- DE-A- 2 905 949
- DE-A- 3 509 520
- US-A- 5 014 749

## Beschreibung

Die Erfindung betrifft eine Sanitärarmatur, insbesondere Waschtischarmatur, mit einem Armaturengehäuse; mit einem im Armaturengehäuse ausgebildeten Aufnahmeraum für mindestens ein den Wasserstrom steuerndes Element; mit einem den Aufnahmeraum nach unten abschließenden Boden; mit mindestens einem in einer Durchgangsbohrung des Bodens lösbar befestigten Rohr-Anschlußstück, das zur axialen Fixierung einen Umfangswulst aufweist, der mit einer Stirnseite an einer Durchmesserstufe der Durchgangsbohrung anliegt.

Eine derartige Sanitärarmatur ist in der DE 31 19 313 C2 beschrieben. Bei dieser besteht der Boden aus zwei durch mechanischen Formschluß miteinander verbundenen Bodenteilen, zwischen denen der Umfangswulst der Rohr-Anschlußstücke aufgenommen ist. Die Anordnung ist so, daß die Rohr-Anschlußstücke in beiden Richtungen zuverlässig axial fixiert sind, ohne daß von ihnen ein Einfluß auf das in dem Aufnahmeraum untergebrachte, den Wasserstrom steuernde Element ausgehen kann. Nachteilig hierbei ist, daß die Montage der Rohr-Anschlußstücke bereits im Werk erfolgen muß und zum Lösen der Rohr-Anschlußstücke eine vollständige Demontage der Armatur einschließlich der Trennung der beiden Bodenteile erfolgen muß.

Bei der in der DE 23 31 000 beschriebenen Sanitärarmatur werden die Umfangswulste der Rohr-Anschlußstücke zwischen der Oberseite des Bodens und der Unterseite der Steuerkartusche axial festgelegt, die hier das den Wasserstrom steuernde Element darstellt. Bei dieser Bauweise ist nicht ausgeschlossen, daß von den Rohr-Anschlußstücken Kräfte auf die Keramikscheiben ausgeübt werden können, die innerhalb der Steuerkartusche untergebracht sind. Außerdem ist auch hier eine Montage oder Demontage der Rohr-Anschlußstücke nur möglich, solange die Steuerkartusche sich nicht im Aufnahmeraum der Sanitärarmatur befindet.

In der EP 0 472 022 A1 und der EP 0 519 244 A1 sind Steckverbindungen für Rohr-Anschlußstücke von Sanitärarmaturen beschrieben, die zwar ein (gegebenenfalls auch nachträgliches) Einstecken der Rohr-Anschlußstücke in den Boden der Sanitärarmatur gestatten, die danach aber nicht mehr oder jedenfalls nicht auf einfache Weise lösbar sind.

Bei der in der EP 0 681 127 A1 beschriebenen Sanitärarmatur schließlich erfolgt die Fixierung der Rohr-Anschlußstücke statt durch einen angeformten überstehenden Umfangswulst durch einen eingesetzten Sprengring, wobei ebenfalls die formflüssige Axialfixierung der Rohr-Anschlußstücke erst dann vollständig ist, wenn die Steuerkartusche in das Armaturengehäuse eingesetzt ist.

Aufgabe der vorliegenden Erfindung ist es, eine Sanitärarmatur der eingangs genannten Art so auszugestalten, daß in preiswerter Weise das Rohr-Anschlußstück von außen her an die im übrigen vollständig montierte Sanitärarmatur angesetzt und bei Bedarf auch wieder gelöst werden kann.

Diese Aufgabe wird erfindungsgemäß dadurch gelöst, daß
a) die Durchgangsbohrung eine untere, effektive Eintrittsöffnung für das Rohr-Anschlußstück aufweist, die keinen kreisförmigen Querschnitt besitzt und über eine Hinterschneidung in einen weiter innen liegenden Bereich der Durchgangsbohrung mit kreisförmigem Querschnitt übergeht;
b) der Umfangswulst des Rohr-Anschlußstückes derart mit einer Ausnehmung versehen ist, daß er in einer bestimmten Drehposition in die effektive Eintrittsöffnung der Durchgangsbohrung eingeführt und dann durch eine Verdrehung hinter der Hinterschneidung axial festgelegt werden kann.

Erfindungsgemäß ist also der im Querschnitt kreisförmige Bereich der Durchgangsöffnung einseitig durch ein eine Hinterschneidung bildendes Teil verschlossen. Das bodenseitige Ende des Rohr-Anschlußstückes läßt sich daher in die auf diese Weise mit nicht kreisrundem Querschnitt versehene effektive Eintrittsöffnung der Durchgangsbohrung nur in einer bestimmten Drehposition einschieben, in welcher der Umfangswulst aufgrund seiner Ausnehmung an dem die Hinterschneidung bildenden Teil vorbeibewegt werden kann. Durch eine nachfolgende Drehbewegung wird dann ein bestimmter Bereich des Umfangswulstes hinter das die Hinterschneidung bildende Teil gebracht; das Rohr-Anschlußstück kann nunmehr durch axialen Zug nicht mehr entfernt werden. Allerdings läßt sich das Rohr-Anschlußstück durch eine Verdrehung im entgegengesetzten Drehsinn wieder "entriegeln", so daß es in axialer Richtung aus dem Boden entnommen werden kann.

Grundsätzlich wäre es denkbar, das die Hinterschneidung bildende und zu einer effektiven Eintrittsöffnung mit nicht kreisrundem Querschnitt führende Teil einstückig an den unteren Bereich der Durchgangsbohrung anzuformen.

Preiswerter ist es jedoch, wenn die effektive Eintrittsöffnung in die Durchgangsbohrung des Bodens teilweise von einem an der unteren Stirnfläche des Bodens befestigten Teil begrenzt ist, welches bereichsweise über die Durchgangsöffnung ragt und dadurch die Hinterschneidung bildet.

Besonders bevorzugt ist dabei aus Kostengründen diejenige Ausführungsform, bei welcher das die Hinterschneidung bildende Teil der Kopf eines Niets ist, dessen Schaft in einer Bohrung des Bodens aufgenommen ist.

Um ein unabsichtliches Lösen der Rohr-Anschlußstücke durch eine versehentliche Drehung zu verhindern, empfiehlt sich diejenige Ausgestaltung der Erfindung, bei welcher eine Dreh-Anschlageinrichtung vorgesehen ist, mit welcher das Rohr-Anschlußstück innerhalb der Durchgangsbohrung gegen Verdrehung in einer Drehposition sicherbar ist, in welcher der Umfangswulst des Rohr-Anschlußstückes durch die Hinterschneidung axial fixiert ist.

Eine zweckmäßige Ausgestaltung einer derartigen Dreh-Anschlageinrichtung sieht so aus, daß sie ein Druckstück umfaßt, welches in der Verriegelungsposition in die Ausnehmung am Umfangswulst des Rohr-Anschlußstückes eingreift und zur Entriegelung gegen die Kraft eines Federelements so weit axial bewegt werden kann, daß der Umfangswulst des Rohr-Anschlußstückes von ihm freikommt.

Das Druckstück einer derartigen Dreh-Anschlageinrichtung bedarf einer Einrichtung, die verhindert, daß es aus dem Boden von dem Federelement herausgedrückt wird. Diese kann zweckmäßigerweise so aussehen, daß das Druckstück der Dreh-Anschlageinrichtung von der Federeinrichtung in Richtung auf dasjenige an der unteren Stirnseite des Bodens befestigte Teil gedrückt wird, welches die Hinterschneidung bildet. Diesem Teil kommt dann eine Doppelfunktion zu.

Ein Ausführungsbeispiel der Erfindung wird nachfolgend anhand der Zeichnung näher erläutert; es zeigen
- Figur 1: eine perspektivische Ansicht des Bodens einer sanitären Waschtischarmatur ohne eingesetzte Rohr-Anschlußstücke;
- Figur 2: die perspektivische Ansicht eines Rohr-Anschlußstückes zur Verwendung mit dem in Figur 1 gezeigten Boden;

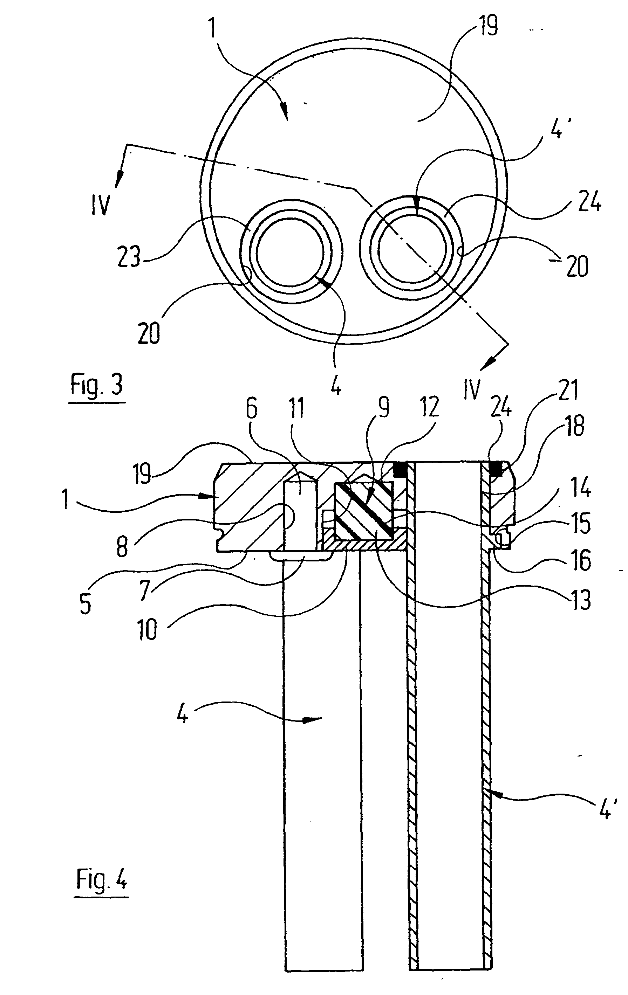

- Figur 3: eine Draufsicht auf den Boden von Figur 1;
- Figur 4: einen Schnitt gemäß der abgewinkelten Linie IV-IV von Figur 3;
- Figur 5: die perspektivische Ansicht des Bodens von Figur 1 mit eingesetzten Rohr-Anschlußstücken nach Figur 2.

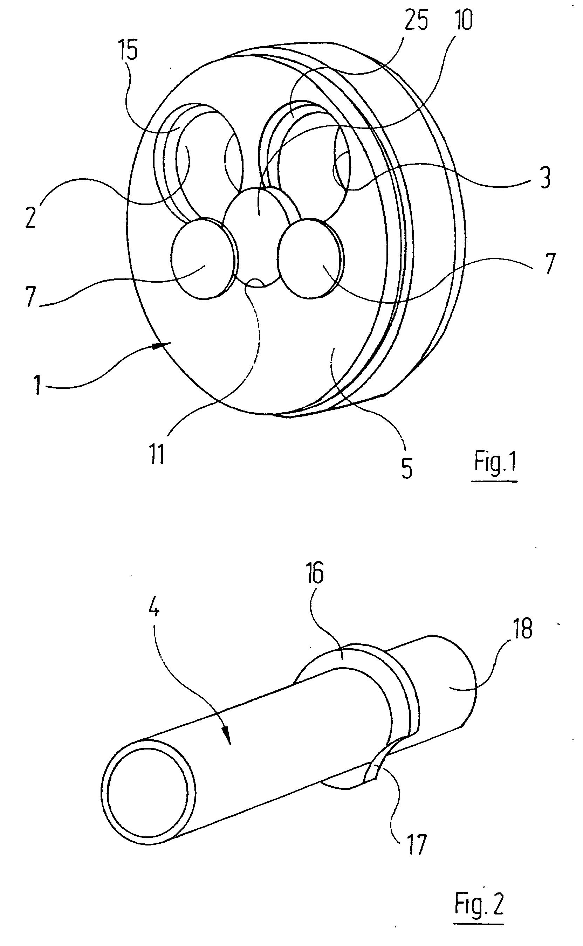

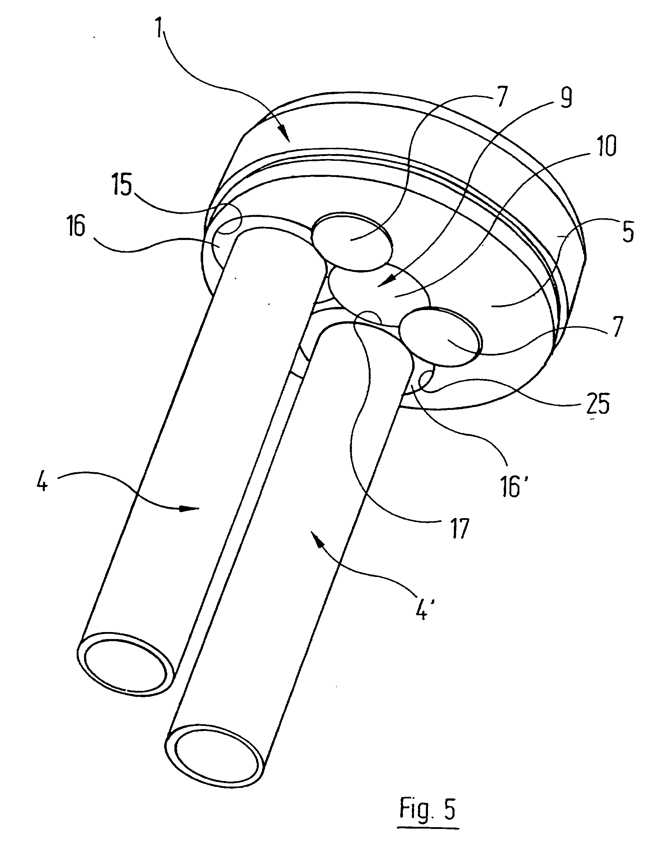

Figur 1 zeigt in perspektivischer Ansicht von schräg unten den Boden 1 einer sanitären Waschtischarmatur, beispielsweise eines Einhebelmischers. Der abgebildete Boden 1 ist ein separates Teil, welches in ein nicht dargestelltes Armaturengehäuse eingesetzt wird. Er könnte jedoch auch einstückig an das Armaturengehäuse angeformt sein. Auf die der Blickrichtung von Figur 1 abgewandte kreisförmige Stirnseite 19 des Bodens 1 (vgl. Figur 4) ist in der montierten Sanitärarmatur eine Kartusche (nicht gezeigt) aufgesetzt, welche die den Wasserstrom kontrollierenden Elemente, z.B. verschiebbare Keramikscheiben, in bekannter Weise enthält.

Der Boden 1 enthält zwei abgestufte Durchgangsbohrungen 2, 3 mit beidseitigen Erweiterungen 15, 25 zur Aufnahme von Rohr-Anschlußstücken 4, wie eines in Figur 2 dargestellt ist. Die Durchgangsbohrungen 2, 3 besitzen einen kreisrunden Querschnitt, werden jedoch an der in Figur 1 sichtbaren, in der Montagestellung der Sanitärarmatur nach unten weisenden kreisförmigen Stirnseite 5 jeweils durch einen im Durchmesser vergrößerten Kopf 7 eines Niets 6 teilweise überdeckt. Auf diese Weise ergibt sich eine von einem kreisrunden Querschnitt abweichende effektive Eintrittsöffnung in die Durchgangsbohrungen 2 und 3 mit einer hinter dem in die Durchgangsbohrungen 2, 3 ragenden Bereich der Nietköpfe 7 liegenden Hinterschneidung. Die Nieten 6 sind, wie der Figur 4 zu entnehmen ist, in Bohrungen 8 des Bodens 1 befestigt, z.B. in diese eingeschlagen.

In den Boden 1 ist zudem eine Dreh-Anschlageinrichtung integriert, die insgesamt in Figur 4 mit dem Bezugszeichen 9 versehen ist. Die Dreh-Anschlageinrichtung 9 umfaßt ein im Querschnitt kreisrundes, knopfähnliches Druckstück 10, welches in einer Bohrung 11 des Bodens 1 axial beweglich angeordnet ist. Zwischen der ins Innere des Bodens 1 weisenden Stirnseite des Druckstückes 10 und dem Boden einer die Bohrung 11 mit kleinerem Durchmesser vertiefenden Sackbohrung 12 ist ein Federelement 13 verspannt. Das Federelement 13 hat im dargestellten Ausführungsbeispiel die Form eines elastomeren Blockes, der an seinem in Figur 4 oberen Ende in der Sackbohrung 12 und an seinem in Figur 4 unteren Ende in einer entsprechenden Ausnehmung 14 an der Rückseite des Druckstückes 10 aufgenommen ist. Die Anordnung ist so, daß das Druckstück 10 von der Federeinrichtung 13 nach außen gedrückt wird. Der Abstand zwischen den Achsen der Bohrungen 8 und 11 im Boden 1 sowie die Durchmesser der Nietköpfe 7 und des Druckstückes 10 sind so aufeinander abgestimmt, daß der Randbereich des Druckstückes 10 von den Nietköpfen 7 in der Bohrung 11 des Bodens 1 gehalten wird.

Wie insbesondere der Figur 1 zu entnehmen ist, schneidet die Bohrung 11, in welcher sich das Druckstück 10 axial bewegt, die Durchgangsbohrungen 2 und 3 des Bodens 1 an. Das in die Bohrung 11 eingesetzte Druckstück 10 ragt also bereichsweise in die erweiterten Endbereiche 15 der Bohrungen 2, 3 hinein.

Bei dem in Figur 2 dargestellten Rohr-Anschlußstück 4 handelt es sich um ein Verbindungsteil, welches mit einem nicht dargestellten Zulaufschlauch dicht verbunden ist. Es könnte sich bei ihm auch um den Endbereich eines konventionellen Zulaufrohres handeln. An der äußeren Mantelfläche des Rohr-Anschlußstückes 4 ist eine Umfangswulst 16 ausgebildet, der einen größeren Außendurchmesser als das übrige Rohr-Anschlußstück 4 hat. Der Umfangswulst 16 kann z.B. durch Stauchen hergestellt sein, hat dann aber im allgemeinen weniger scharfe Kanten als dies in Figur 2 dargestellt ist. Der Umfangswulst 16 ist kein vollständig geschlossener Ring; vielmehr ist er durch eine kreisbogenförmige Ausnehmung 17 unterbrochen. Der Durchmesser der Ausnehmung 17 entspricht dem Durchmesser des Druckstückes 10 der Dreh-Anschlageinrichtung 9.

Das Rohr-Anschlußstück 4 von Figur 2 wird in folgender Weise in dem Boden 1 von Figur 1 befestigt:

Der über den Umfangswulst 16 überstehende Endbereich 18 des Rohr-Anschlagstückes 4 wird in eine der Durchgangsbohrungen 2, 3 eingeführt, wobei die Drehposition des Rohr-Anschlagstückes 4 innerhalb der Durchgangsbohrung 2, 3 so ist, daß die Ausnehmung 17 am Rohr-Anschlagstück 4 auf den in die jeweilige Erweiterung 15 der Durchgangsbohrung 2, 3 hineinragenden Bereich des entsprechenden Nietkopfes 7 ausgerichtet ist. In dieser Winkelposition läßt sich der Umfangswulst 16 an dem Nietkopf 7 vorbei in die Erweiterung 15 der Durchgangsbohrung 2, 3 einschieben, bis die in Figur 2 hintere, in der Montagestellung der Sanitärarmatur obere ringförmige Stirnfläche des Umfangswulstes 16 an der ringförmigen Stufe zwischen der Erweiterung 15 und der Durchgangsbohrung 2, 3 zur Anlage kommt. Die axiale Tiefe der ringförmigen Erweiterung 15 ist dabei so, daß die in Figur 2 vordere, in der Montagestellung der Sanitärarmatur also untere ringförmige Stirnfläche des Umfangswulstes 16 mit der Stirnfläche 5 des Bodens 1 fluchtet. In dieser Position wird nunmehr das Rohr-Anschlußstück 4 innerhalb der Durchgangsbohrung 2 in der Sicht der Figur 1 gegen den Uhrzeigersinn, innerhalb der Durchgangsbohrung 3 im Uhrzeigersinn, verdreht. Dabei wandert ein bestimmter Bereich des Umfangswulstes 16 hinter den entsprechenden Nietkopf 7.

Beim Einschieben des Rohr-Anschlußstückes 4 in die Bohrung 2 wird das Druckstück 10 der Dreh-Anschlageinrichtung 9 zunächst von dem Umfangswulst 16 des Rohr-Anschlußstückes 4 gegen die Kraft der Federeinrichtung 13 nach hinten gedrückt. Wenn im Zuge der Drehbewegung des Rohr-Anschlußstückes 4 dessen Ausnehmung 17 in Fluchtung mit dem Druckstück 10 gelangt, schnappt dieses unter dem Einfluß der Federeinrichtung 13 axial nach außen, bis es mit seiner Stirnfläche wieder in Anlage an dem entsprechenden Nietkopf 7 ist. Es greift nunmehr mit einem Umfangsbereich in die Ausnehmung 17 des eingeführten Rohr-Anschlußstückes 4 ein, so daß dieses auch gegen Drehbewegungen verriegelt ist.

Sodann wird in die zweite Durchgangsbohrung 2, 3 in entsprechender Weise ein weiteres Rohr-Anschlußstück 4 eingeführt.

Zur Demontage der Rohr-Anschlußstücke 4 wird von Hand oder mittels eines geeigneten Werkzeuges das Druckstück 10 der Dreh-Anschlageinrichtung 9 gegen die Kraft der Federeinrichtung 13 nach hinten gedrückt, bis es vom Umfangswulst 16 der Rohr-Anschlußstücke 4 freikommt. Die Rohr-Anschlußstücke 4 können nunmehr wieder zurückgedreht werden, bis die Ausnehmungen 17 mit den entsprechenden Nietköpfen 7 fluchten. Dann können die Rohr-Anschlußstücke 4 axial herausgezogen werden.

Wie Figur 4 zeigt, ist der über den Umfangswulst 16 überstehende Bereich 18 der Rohr-Anschlußstücke 4 etwa so lang, daß er bis nahe an die obere Stirnfläche 19 des Bodens 1 (vergleiche Figur 4) reicht. In den dortigen Erweiterungen 20 der Durchgangsbohrungen 2, 3 liegt jeweils ein O-Ring 23, 24 ein, welcher das obere Ende des jeweiligen Rohr-Anschlußstückes 4 gegen den Boden 1 abdichtet.

## Patentansprüche

1. Sanitärarmatur, insbesondere Waschtischarmatur,
mit einem Armaturengehäuse; mit einem im Armaturengehäuse ausgebildeten Aufnahmeraum für mindestens ein den Wasserstrom steuerndes Element; mit einem den Aufnahmeraum nach unten abschließenden Boden (1); mit mindestens einem in einer Durchgangsbohrung (2,3) des Bodens lösbar befestigten Rohr-Anschlußstück (4), das zur axialen Fixierung einen Umfangswulst (16) aufweist, der mit einer Stirnseite an einer Durchmesserstufe der Durchgangsbohrung anliegt,
**dadurch gekennzeichnet, daß**
a) die Durchgangsbohrung (2, 3) eine untere, effektive Eintrittsöffnung für das Rohr-Anschlußstück (4) aufweist, die keinen kreisförmigen Querschnitt besitzt und über eine Hinterschneidung in einen weiter innen liegenden Bereich der Durchgangsbohrung (2, 3) mit kreisförmigem Querschnitt übergeht;
b) der Umfangswulst (16) des Rohr-Anschlußstücks (4) derart mit einer Ausnehmung (17) versehen ist, daß er in einer bestimmten Drehposition in die effektive Eintrittsöffnung der Durchgangsbohrung (2, 3) eingeführt, und dann durch eine Verdrehung hinter der Hinterschneidung axial festgelegt werden kann.

2. Sanitärarmatur nach Anspruch 1, **dadurch gekennzeichnet,**
**daß** die effektive Eintrittsöffnung in die Durchgangsbohrung (2, 3) des Bodens (1) teilweise von einem an der unteren Stirnfläche (5) des Bodens (1) gebildeten Teil (7) begrenzt ist, welches bereichsweise über die Durchgangsöffnung (2, 3) ragt und dadurch die Hinterschneidung bildet.

3. Sanitärarmatur nach Anspruch 2, **dadurch gekennzeichnet,**
**daß** das die Hinterschneidung bildende Teil der Kopf (7) eines Niets (6) ist, dessen Schaft in einer Bohrung (8) des Bodens (1) aufgenommen ist.

4. Sanitärarmatur nach einem der vorhergehenden Ansprüche,
**dadurch gekennzeichnet, daß** eine Dreh-Anschlageinrichtung (9) vorgesehen ist, mit welcher das Rohr-Anschlußstück (4) innerhalb der Durchgangsbohrung (2, 3) gegen Verdrehung in einer Drehposition sicherbar ist, in welcher der Umfangswulst (16) des Rohr-Anschlußstücks (4) durch die Hinterschneidung axial fixiert ist.

5. Sanitärarmatur nach Anspruch 4, **dadurch gekennzeichnet,**
**daß** die Dreh-Anschlageinrichtung (9) ein Druckstück (10) umfaßt, welches in der Verriegelungsposition in die Ausnehmung (17) am Umfangswulst (16) des Rohr-Anschlußstückes (4) eingreift und das zur Entriegelung gegen die Kraft eines Federelements (13) so weit axial bewegt werden kann, daß der Umfangswulst (16) des Rohr-Anschlußstückes (4) von ihm freikommt.

6. Sanitärarmatur nach Anspruch 5 bei Rückbeziehung
auf Anspruch 2 oder 3, **dadurch gekennzeichnet, daß** das Druckstück (10) der Dreh-Anschlageinrichtung (9) von der Federeinrichtung (13) in Richtung auf dasjenige an der unteren Stirnseite des Bodens (1) befestigte Teil (7) gedrückt wird, welches die Hinterschneidung bildet.

## Claims

1. A sanitary fixture, more particular a wash-stand fixture,
with a fixture housing; with a receiving chamber constructed in the fixture housing for at least one element controlling the water flow; with a base (1) sealing the receiving chamber at the bottom; with at least one pipe connector (4), which is detachably secured in a through bore (2, 3) of the base and for axial securing comprises a circumferential bead (16), which rests with an end face against a diameter step of the through bore,
**characterised in that**
a) the through bore (2, 3) comprises a lower, effective inlet aperture for the pipe connector (4) which has a non-circular cross section and extends via an undercut into a region of the through bore (2, 3) lying further inwards and having a circular cross section;
b) the circumferential bead (16) of the pipe connector (4) is provided with a recess (17) in such a manner that it can be introduced in a given rotary position into the effective inlet aperture of the through bore (2, 3) and then axially secured behind the undercut by a rotation.

2. A sanitary fixture according to claim 1, **characterised in**
**that** the effective inlet aperture into the through bore (2, 3) of the base (1) is partially restricted by a part (7) formed on the lower end face (5) of the base (1), which projects partially over the through aperture (2, 3) and thereby forms the undercut.

3. A sanitary fixture according to claim 2, **characterised in**
**that** the part forming the undercut is the head (7) of a rivet (6), whose shaft is accommodated in a bore (8) of the base (1).

4. A sanitary fixture according to one of the preceding
claims, **characterised in that** a rotary stop device (9) is provided, by means of which the pipe connector (4) can be secured against rotation within the through bore (2, 3) in a rotary position in which the circumferential bead (16) of the pipe connector (4) is axially secured by the undercut

5. A sanitary fixture according to claim 4, **characterised in**
**that** the rotary stop device (9) comprises a press element (10), which engages in the locking position in the recess (17) on the circumferential bead (16) of the pipe connector (4) and for unlocking can be moved axially against the force of a spring element (13) to such a degree that the circumferential bead (16) of the pipe connector (4) is released from the press element (10).

6. A sanitary fixture according to claim 5 with reference to
claim 2 or 3, **characterised in that** the press element (10) of the rotary stop device (9) is forced by the spring device (13) in the direction of that part (7) secured to the lower end face of the base (1) which forms the undercut.

## Revendications

1. Robinet sanitaire, en particulier robinet pour lavabo, comprenant un corps de robinetterie ; un logement réalisé dans le corps de robinetterie et destiné à recevoir au moins un élément de commande du flux d'eau ; un fond (1) fermant le logement par le bas ; au moins un élément de raccord de tuyau (4), qui est fixé de manière amovible dans un trou débouchant (2, 3) du fond et qui comporte un bourrelet périphérique (16) destiné au blocage axial, lequel s'appuie avec une face frontale contre un épaulement périphérique du trou débouchant,
**caractérisé en ce que**
a) le trou débouchant (2, 3) est muni d'un orifice d'admission inférieur effectif pour l'élément de raccord de tuyau (4), lequel orifice possède une section non circulaire et, au-delà d'une contre-dépouille, se prolonge davantage à l'intérieur du trou débouchant (2, 3) par une partie à section circulaire ;
b) le bourrelet périphérique (16) de l'élément de raccord de tuyau (4) est muni d'un évidement (17), de telle sorte que, dans une position de rotation déterminée, ledit bourrelet périphérique peut être introduit dans l'orifice d'admission effectif du trou débouchant (2, 3) et à la suite d'une rotation peut être bloqué axialement derrière la contre-dépouille.

2. Robinet sanitaire selon la revendication 1, **caractérisé en ce que** l'orifice d'admission effectif dans le trou débouchant (2, 3) du fond (1) est délimité en partie par une pièce (7) formée au niveau de la face frontale (5) inférieure du fond (1), laquelle s'avance en partie au-dessus du trou débouchant (2, 3) et forme de ce fait la contre-dépouille.

3. Robinet sanitaire selon la revendication 2, **caractérisé en ce que** la pièce formant la contre-dépouille est formée par la tête (7) d'un rivet (6), dont la tige est logée dans une forure (8) du fond (1).

4. Robinet sanitaire selon l'une quelconque des revendications précédentes, **caractérisé en ce qu'**il est prévu un organe de butée anti-rotation (9), par lequel l'élément de raccord de tuyau (4) peut être bloqué à l'intérieur du trou débouchant (2, 3) contre un mouvement de rotation dans une position de rotation, dans laquelle le bourrelet périphérique (16) de l'élément de raccord de tuyau (4) est bloqué axialement par la contre-dépouille.

5. Robinet sanitaire selon la revendication 4, **caractérisé en ce que** l'organe de butée anti-rotation (9) comporte un élément de pression (10) qui, dans la position de blocage, s'engage dans l'évidement (17) du bourrelet périphérique (16) de l'élément de raccord de tuyau (4) et, pour le déblocage, peut se déplacer à l'encontre de la force exercée par un élément élastique (13) jusqu'à ce que le bourrelet périphérique (16) de l'élément de raccord de tuyau (4) se dégage de celui-ci.

6. Robinet sanitaire selon la revendication 5, se rattachant à la revendication 2 ou 3, **caractérisé en ce que** l'élément de pression (10) de l'organe de butée anti-rotation (9) est poussé par l'élément élastique (13) en direction de la pièce (7) fixée contre la face frontale inférieure du fond (1), laquelle pièce forme la contre-dépouille.
